# EUROPÄISCHE PATENTSCHRIFT

(11) **EP 2 333 277 B1**
(45) Veröffentlichungstag und Bekanntmachung des Hinweises auf die Patenterteilung: **06.01.2016**
(21) Anmeldenummer: 10189938.3
(22) Anmeldetag: 04.11.2010
(51) Int. Cl.: F02B 67/10, F01N 13/10, F01N 13/16, F02B 37/00

(54) **Abgaskrümmer für eine Brennkraftmaschine**
Exhaust manifold for a combustion engine
Collecteur de gaz d'échappement pour moteur à combustion interne

(30) Priorität: 09.12.2009 DE 102009057645
(43) Veröffentlichungstag der Anmeldung: 15.06.2011
(73) Patentinhaber: Bayerische Motoren Werke Aktiengesellschaft, 80809 München (DE)
(72) Erfinder: Verdoorn, Werner, 82256, Fuerstenfeldbruck (DE); Dr.Reulein, Claus, 80333, Muenchen (DE); Dr.Schwarz, Christian, 81245, Muenchen (DE)

(56) Entgegenhaltungen:
- WO-A1-2006/050896
- DE-B3- 10 307 028
- FR-A1- 2 801 072
- FR-A1- 2 849 469

## Beschreibung

Die Erfindung betrifft einen Abgaskrümmer für eine Brennkraftmaschine mit den Merkmalen aus dem Oberbegriff des Patentanspruchs 1.

Aus der europäischen Patentanmeldung EP 1 536 141 A1 ist beispielsweise ein Gehäuse für einen Abgasturbolader bekannt. Dieses Gehäuse für den Abgasturbolader ist einstückig mit einem Abgaskrümmer für eine 5-zylindrige Brennkraftmaschine gefertigt. Wenigstens ein Teil dieses Gehäuses des Abgasturboladers ist gemeinsam mit der Abgassammelleitung und dem Zylinderkopf in einem Stück gegossen. Dies kann so erfolgen, dass Sandkernteile für einen Teil des Gehäuses des Abgasturboladers mit Sandkernteilen für die Hohlräume einer Abgassammelleitung und diese wiederum mit Sandkernteilen für den Zylinderkopf zusammengefügt und miteinander verbunden und anschließend in Kokillenteile für den Teil des Gehäuses des Abgasturboladers, für die Abgassammelleitung und den Zylinderkopf eingebracht werden, worauf flüssiges Metall in die Kokillenteile eingefüllt und erstarren gelassen wird. Anschließend entformt man dann das Abgasturboladergehäuseteil, den Abgassammler und den Zylinderkopf und die Kernteile werden entfernt.

Weiter ist aus der deutschen Offenlegungsschrift DE 10 2007 060 397 A1 ein Abgasturbolader bekannt mit einem Verbindungsflansch zur Verbindung mit einem Zylinderkopf, wobei der Verbindungsflansch mindestens eine Anschlussöffnung zur Aufnahme einer Fluidleitung zur Zufuhr und/oder Abfuhr von Fluiden aufweist. Auch in diesem Ausführungsbeispiel sind der Abgaskrümmer und das Gehäuse des Abgasturboladers einstückig und materialeinheitlich aufgebaut.

Siehe auch der FR 2801072 A1.

Nachteilig an dem bekannten Stand der Technik sind die relativ hohen Bauteilgewichte, auch ist aufgrund der hohen Wandflächenanteile aus Kühlungssicht bei 4- und 6-Zylinder-Brennkraftmaschinen mit hoher spezifischer Leistung die Wärmeabfuhr sehr wahrscheinlich nicht möglich.

Aufgabe der vorliegenden Erfindung ist es, o. g. Nachteile zu vermeiden.

Diese Aufgabe wird durch das Merkmal im kennzeichnenden Teil des Patentanspruchs 1 gelöst.

Besonders bevorzugte Weiterbildungen der Erfindung sind den Unteransprüchen zu entnehmen.

Durch die Kombination eines Abgaskrümmers mit einem integrierten Abgasturbinengehäuse und den separaten Abgasrohren kann das Turbinengehäuse direkt an den .Zylinderkopf oder auch an das Kurbelgehäuse geflanscht werden und so die Kostenvorteile eines Leichtmetallwerkstoffs, wie z. B. Aluminium ausgenutzt werden. Gleichzeitig wird die von der Außenluft zu kühlende Oberfläche so gering gehalten, dass die Anwendung auch für mehrzylindrige Brennkraftmaschinen mit hohen spezifischen Leistungen und hoher thermischer Belastung umsetzbar ist. Die restlichen separaten Abgasrohre können in konventioneller Bauart (z. B. als kostengünstige Stahlrohre, Stahlgussrohre, Blechrohre oder luftspaltisolierte Blechrohre) dargestellt werden. Durch eine geeignete geometrische Ausgestaltung kann die Anordnung sowohl für Monoscroll- als auch für Twinscroll-Turbinen (einflutiges oder zweiflutiges Turbinengehäuse) oder für Turbinen mit einer variablen Turbinengeometrie verwendet werden. Die Medienführung für beispielsweise Kühlmittel oder Schmiermittel kann entweder intern ohne zusätzliche Schläuche oder Rohre, durch korrespondierende Verbindungskanäle zwischen dem Zylinderkopf oder dem Kurbelgehäuse und dem Abgasturbinengehäuse bzw. Abgaskrümmer oder extern über zusätzliche Schläuche oder Rohre erfolgen.

Aufgrund der vorliegenden Erfindung ergibt sich ein großes Kosteneinsparpotential aufgrund eines günstigeren Abgaskrümmermaterials. Darüber hinaus werden die Abgastemperaturen in vorteilhafter Weise wesentlich besser abgesenkt. Gleichzeitig kann bei Verwendung eines Leichtmetalls, wie z. B. Aluminium das Gewicht des Abgaskrümmermoduls reduziert werden. Weiter sind funktionale Vorteile beispielsweise im Warmlauf bzw. beim Kraftstoffverbrauch im Bereich der Volllast zu erwarten.

Im Folgenden ist die Erfindung anhand von 4 Figuren näher erläutert.
- Fig. '1: zeigt eine Aufsicht auf einen erfindungsgemäßen, dreidimensional dargestellten Abgaskrümmer mit integriertem Turbinengehäuse für ein erstes Ausführungsbeispiel.
- Fig. 2: zeigt schematisch nochmals das erste Ausführungsbeispiel.
- Fig. 3: zeigt schematisch ein zweites Ausführungsbeispiel.
- Fig. 4: zeigt schematisch ein drittes Ausführungsbeispiel.

Im Folgenden gelten in den Fig. '1 bis 4 für gleiche Bauelemente die gleichen Bezugsziffern.

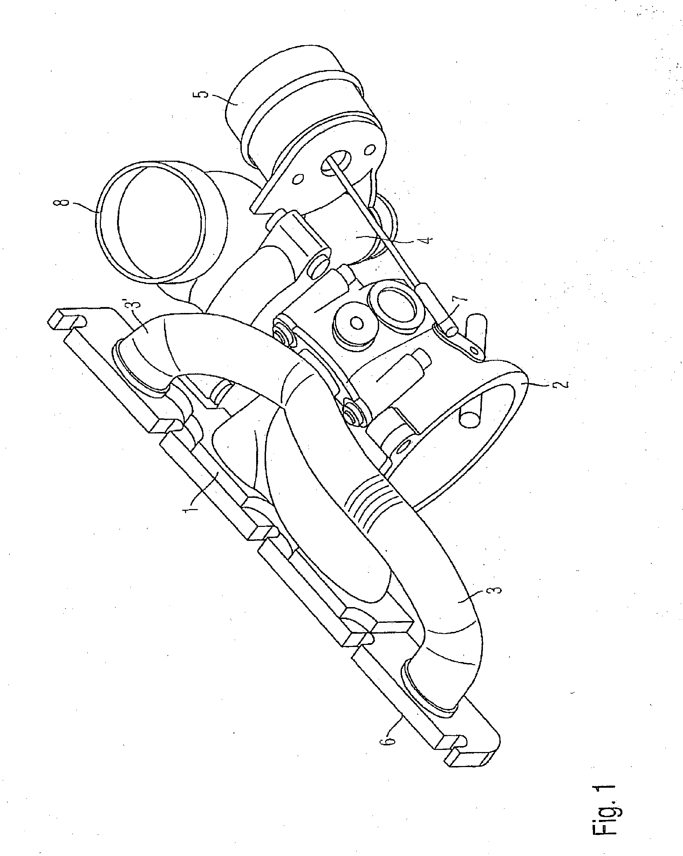

Fig. 1 zeigt eine Aufsicht auf einen erfindungsgemäßen, dreidimensional dargestellten Abgaskrümmer 1 mit integriertem Turbinengehäuse 2 für ein erstes Ausführungsbeispiel. Der Abgaskrümmer 1 in diesem Ausführungsbeispiel ist beispielsweise für eine in Fig. 1 nicht dargestellte 4-zylindrige Brennkraftmaschine ausgeführt. In den Abgaskrümmer 1 ist einstückig und materialeinheitlich das Turbinengehäuse 2 für einen Abgasturbolader integriert. Der Abgaskrümmer 1 ist im vorliegenden Ausführungsbeispiel für zwei mittig in der Brennkraftmaschine angeordnete Zylinder Z vorgesehen, wobei die zwei äußeren Zylinder Z jeweils über ein erfindungsgemäßes, separates Abgasrohr 3, 3' mit dem Abgaskrümmer 1 abgasführend verbunden sind. Die separaten Abgasrohre 3, 3' und der Abgaskrümmer 1 weisen einen gemeinsamen ersten Montageflansch für eine Montage an einem nicht dargestellten Zylinderkopf auf. Weiter sind die Abgasrohre 3, 3' zentral zusammengeführt und über einen zweiten Montageflansch 7 mit dem Abgaskrümmer 1 abgasführend verbunden.

Benachbart zum Turbinengehäuse 2 ist ein Verdichtergehäuse 4 angeordnet, das zur Gewichtsreduzierung beispielsweise aus einem Kunststoff gefertigt sein kann. Für eine Klappenbetätigung für ein in Fig. 1 nicht erkennbares Wastegate ist ein Stellelement 5 vorgesehen. Weiter ist an das Verdichtergehäuse 4 ein Stutzen einer Ladeluftleitung 8 angeordnet.

Das erfindungsgemäße, separate Abgasrohr 3, 3' kann beispielsweise ein Stahlrohr oder ein Stahlgussrohr oder ein Blechrohr oder ein luftspaltisoliertes Blechrohr sein. Besonders bevorzugt ist der Abgaskrümmer 1 gemeinsam mit dem Turbinengehäuse 2 aus einem Leichtmetall, bevorzugt aus Aluminium aber auch kostengünstiger Grauguss ist möglich. Um eine Überhitzung des Materials zu vermeiden, weist der Abgaskrümmer 1 bevorzugt zumindest einen nicht dargestellten Kühlmittelkanal auf, der von einem Kühlmittel durchströmbar ist. Dieser Kühlmittelkanal kann beispielsweise über eine externe Leitung gespeist werden oder von einem korrespondierenden Kühlmittelkanal im Zylinderkopf. Auch ein Schmiermittel zur Schmierung des Turbinenrades oder Turbinenwelle und/oder deren Lagerung und/oder zur Kühlung des Abgaskrümmers 1 kann beispielsweise über eine externe Leitung gespeist oder von einem korrespondierenden Schmiermittelkanal im Zylinderkopf oder Kurbelgehäuse zugeführt werden. Die Abfuhr der Fluide kann analog erfolgen. In einer weiteren Ausführungsform kann das Turbinengehäuse 2 für eine Monoscroll- oder Twinscroll-Turbine (einflutig oder zweiflutig) oder auch für eine Turbine mit einer variablen Turbinengeometrie (VTG) ausgestaltet sein. In wiederum einer weiteren Weiterbildung kann der Abgaskrümmer 1 auch einstückig mit dem Zylinderkopf oder auch mit dem Kurbelgehäuse ausgeführt sein.

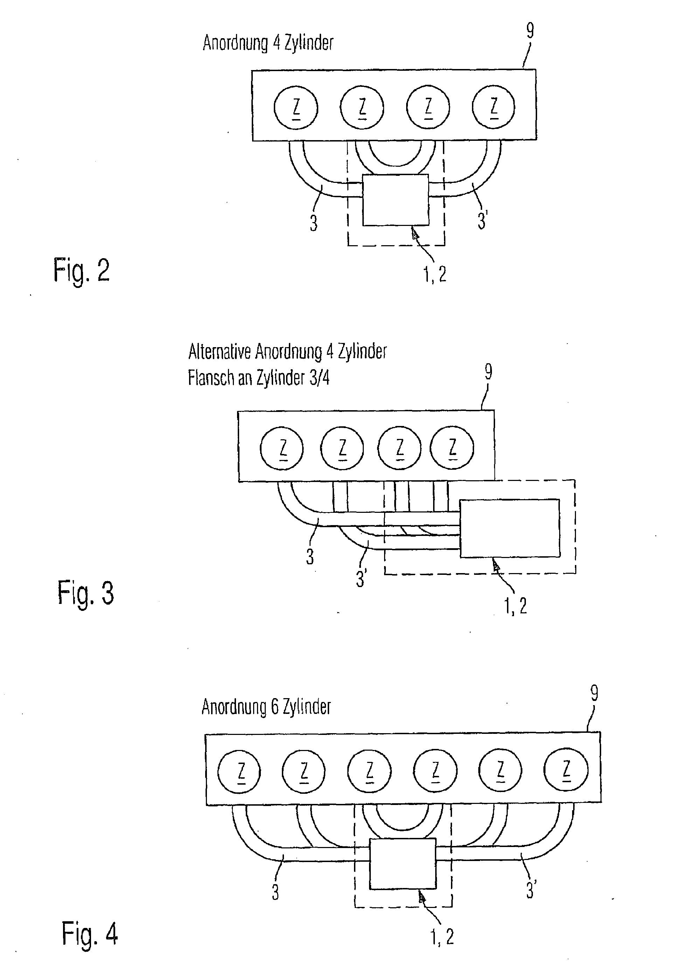

Fig. 2 zeigt schematisch nochmals das erste besonders bevorzugte Ausführungsbeispiel für eine 4-Zylinder-Brennkraftmaschine 9. Die Zylinder sind durch Kreise symbolisch dargestellt und jeweils mit einem Z bezeichnet. Wie bereits zu Fig. 1 ausgeführt, ist an die zwei zentralen Zylinder Z der erfindungsgemäße Abgaskrümmer 1 mit dem integrierten Turbinengehäuse 2 angeordnet, wobei die äußeren Zylinder Z jeweils über ein separates Abgasrohr 3, 3' mit dem Abgaskrümmer 1 abgasführend verbunden sind.

Fig. 3 zeigt schematisch ein zweites besonders bevorzugtes Ausführungsbeispiel für eine 4-Zylinder-Brennkraftmaschine. In diesem zweiten besonders bevorzugten Ausführungsbeispiel ist der erfindungsgemäße Abgaskrümmer 1 an zwei zueinander benachbarte äußere Zylinder Z der Brennkraftmaschine 9 angeordnet, wobei die zwei weiteren Zylinder Z wiederum jeweils über ein erfindungsgemäßes, separates Abgasrohr 3, 3' mit dem Abgaskrümmer 1 abgasführend verbunden sind.

Fig. 4 zeigt schematisch ein drittes besonders bevorzugtes Ausführungsbeispiel für eine 6-Zylinder-Brennkraftmaschine 9. Auch in diesem dritten besonders bevorzugten Ausführungsbeispiel ist der erfindungsgemäße Abgaskrümmer 1 mit dem integrierten Turbinengehäuse 2 an die zwei zentral angeordneten Zylinder Z angeordnet, während die vier übrigen Zylinder Z wiederum über separate Abgasrohre 3, 3' mit dem Abgaskrümmer 1 abgasführend verbunden sind. Hierbei sind jeweils 2 benachbart zueinander angeordnete Zylinder Z zu einem separaten Abgasrohr 3, 3' zusammengeführt, welches dann seinerseits abgasführend in den Abgaskrümmer 1 mündet.

Durch die Kombination des Abgaskrümmers 1 mit einem integrierten Turbinengehäuse 2 und den separaten Abgasrohren 3, 3' kann das Turbinengehäuse 2 direkt an den Zylinderkopf oder auch an das Kurbelgehäuse geflanscht werden und so die Kostenvorteile eines Leichtmetallwerkstoffs, wie z. B. Aluminium ausgenutzt werden. Durch die Kühlung ist auch die Verwendung von einem kostengünstigen Graugussmaterial möglich. Gleichzeitig wird die von der Außenluft zu kühlende Oberfläche des Abgaskrümmers 1 so gering gehalten, dass die Anwendung auch für mehrzylindrige Brennkraftmaschinen mit hohen spezifischen Leistungen und hoher thermischer Belastung umsetzbar ist. Die restlichen separaten Abgasrohre 3, 3' können in konventioneller Bauart (z. B. als kostengünstige Stahlrohre, Stahlgussrohre, Blechrohre oder luftspaltisolierte Blechrohre) dargestellt werden. Durch eine geeignete geometrische Ausgestaltung kann die Anordnung sowohl für Monoscroll- als auch für Twinscroll-Turbinen (einflutiges oder zweiflutiges Turbinengehäuse) oder auch für eine Turbine mit variabler Turbinengeometrie verwendet werden. Die Medienführung für beispielsweise Kühlmittel oder Schmiermittel kann entweder intern über korrespondierende Kanäle im Zylinderkopf oder Kurbelgehäuse und Turbinengehäuse 2 oder Abgaskrümmer 1 ohne zusätzliche Schläuche oder Rohre oder extern über zusätzliche Schläuche oder Rohre erfolgen.

Aufgrund der vorliegenden Erfindung ergibt sich ein großes Kosteneinsparpotential aufgrund eines günstigeren Abgaskrümmermaterials. Darüber hinaus werden die Abgastemperaturen in vorteilhafter Weise wesentlich besser abgesenkt. Gleichzeitig kann bei Verwendung eines Leichtmetalls, wie z. B. Aluminium das Gewicht des Abgaskrümmermoduls reduziert werden. Weiter sind funktionale Vorteile beispielsweise im Warmlauf bzw. beim Kraftstoffverbrauch im Bereich der Volllast zu erwarten.

### Bezuqszeichenliste:

- 1.: Abgaskrümmer
- 2.: Turbinengehäuse
- 3,3': Abgasrohr
- 4.: Verdichtergehäuse
- 5.: Stellelement
- 6.: erster Montageflansch
- 7.: zweiter Montageflansch
- 8.: t_adeiuftleitung
- 9.: Brennkraftmaschine

- Z: Zylinder

## Patentansprüche

1. Abgaskrümmer (1) für zumindest einen Zylinder (Z) in einem Kurbelgehäuse einer Brennkraftmaschine (9) mit einem Zylinderkopf, wobei die Brennkraftmaschine (9) zumindest einen weiteren Zylinder (Z) als den zumindest einen Zylinder (Z) aufweist und wobei in den Abgaskrümmer (1) einstückig und materialeinheitlich ein Turbinengehäuse (2) eines Abgasturboladers integriert ist, wobei der zumindest eine weitere Zylinder (Z) über ein separates Abgasrohr (3, 3') mit dem Abgaskrümmer (1) abgasführend verbindbar ist,
**dadurch gekennzeichnet, dass** der Abgaskrümmer (1) zumindest einen Kühlmittelkanal aufweist und von einem Kühlmittel kühlbar ist, wobei der Abgaskrümmer an einen Zylinderkopf der Brennkraftmaschine änordenbar ist und der Kühlmittelkanal von einem korrespondierenden Kühlmittelkanal in dem Zylinderkopf und/oder über eine externe Kühlmittelleitung mit Kühlmittel speisbar ist.

2. Abgaskrümmer nach Patentanspruch 1,
**dadurch gekennzeichnet, dass** das separate Abgasrohr (3, 3') ein Stahlrohr oder ein Stahlgussrohr oder ein Blechrohr oder ein luftspaltisoliertes Blechrohr ist.

3. Abgaskrümmer nach Patentanspruch 1 oder 2,
**dadurch gekennzeichnet, dass** der Abgaskrümmer (1) aus einem Leichtmetall oder einem Grauguss ist.

4. Abgaskrümmer nach einem der Patentansprüche 1 bis 3,
**dadurch gekennzeichnet, dass** das Turbinengehäuse (2) für eine Monoscroll- oder Twinscroll-Turbine und/oder für eine variable Turbinengeometrie vorgesehen ist.

5. Abgaskrümmer nach einem der Patentansprüche 1 bis 4,
**dadurch gekennzeichnet, dass** der Abgaskrümmer (1) einstückig mit dem Zylinderkopf oder dem Kurbelgehäuse ist.

## Claims

1. An exhaust manifold (1) for at least one cylinder (Z) in a crankcase of an internal combustion engine (9) comprising a crank head, wherein the engine (9) has at least one cylinder (Z) in addition to the at least one cylinder (Z) and wherein a turbocharger casing (2), made in one piece and made of the same material, is incorporated in the exhaust manifold (1), wherein the at least one additional cylinder (Z) is connectible to the exhaust manifold (1) and conveys exhaust gas via a separate pipe (3, 3'),
**characterised in that** the exhaust manifold (1) has at least one cooling-agent duct and is coolable by a cooling agent, wherein the manifold is disposable on a cylinder head of the engine and the coolant duct is supplied with cooling agent by a corresponding coolant duct in the cylinder head and/or via an external coolant line.

2. A manifold according to claim 1,
**characterised in that** the separate exhaust pipe (3, 3') is a steel tube or a cast steel tube or a metal tube or an air- gap insulated metal tube.

3. An exhaust manifold according to claim 1 or claim 2,
**characterised in that** the manifold (1) is made of a light metal or of grey cast iron.

4. An exhaust manifold according to any of claims 1 to 3,
**characterised in that** the turbine casing (2) is for a mono-sicroll or twin-scroll turbine and/or for a variable-geometry turbine.

5. An exhaust manifold according to any of claims 1 to 4, ,
**characterised in that** the exhaust manifold (1) is integral with the cylinder head or the crank case.

## Revendications

1. Collecteur de gaz d'échappement (1) pour au moins un cylindre (Z) situé dans le carter moteur d'un moteur à combustion interne (9) comprenant une culasse, le moteur à combustion interne (9) comprenant au moins un autre cylindre (Z) en plus du cylindre (Z), et, dans le collecteur de gaz d'échappement un (1) est intégré en une seule pièce et en formant une unité de matériau, un carter de turbine (2) d'un turbocompresseur de gaz d'échappement, l'autre cylindre (Z) pouvant être relié au collecteur de gaz d'échappement (1) de façon à permettre la circulation des gaz d'échappement par une tubulure de gaz d'échappement (3, 3') séparée,
**caractérisé en ce que**
le collecteur de gaz d'échappement (1) comprend au moins un canal de fluide de refroidissement et peut être refroidi par un fluide de refroidissement, le collecteur de gaz d'échappement pouvant être monté sur la culasse du moteur à combustion interne, et le canal de fluide de refroidissement pouvant être alimenté en fluide de refroidissement par un canal de fluide de refroidissement correspondant situé dans la culasse et/ou par une conduite de fluide de refroidissement externe.

2. Collecteur de gaz d'échappement conforme à la revendication 1,
**caractérisé en ce que**
la tubulure de gaz de refroidissement (3, 3') séparée est une tubulure en acier ou une tubulure en fonte ou une tubulure en tôle ou une tubulure en tôle isolée par un intervalle d'air.

3. Collecteur de gaz d'échappement conforme à la revendication 1 ou 2,
**caractérisé en ce qu'**
il est réalisé en un métal léger ou en fonte douce.

4. Collecteur de gaz d'échappement conforme à l'une des revendications 1 à 3,
**caractérisé en ce que**
le carter de turbine (2) est prévu pour une turbine à simple volute ou une turbine à double volute et/ou pour une turbine à géométrie variable.

5. Collecteur de gaz d'échappement conforme à l'une des revendications 1 à 4,
**caractérisé en ce qu'**
il est réalisé en une seule pièce avec la culasse ou le carter moteur.
